# EUROPEAN PATENT APPLICATION

(11) **EP 4 060 265 A1**
(43) Date of publication of application: **21.09.2022**
(21) Application number: 21163371.4
(22) Date of filing: 18.03.2021
(51) Int. Cl.: F25D 23/12, F25D 31/00, A23B 4/005, A23L 3/005

(54) **METHOD FOR REDUCING THE NUMBER OF MICROORGANISMS ON A SURFACE OF AN OBJECT, AN APPARATUS THEREFORE AND A REFRIGERATOR WITH SUCH APPARATUS**

(71) Applicant: Vestel Elektronik Sanayi ve Ticaret A.S., 45030 Manisa (TR)
(72) Inventor: ÖZEN, Erol, 45030 Manisa (TR)
(74) Representative: Kehl, Ascherl, Liebhoff & Ettmayr Patentanwälte Partnerschaft mbB

(57) **Abstract**

The present disclosure provides apparatus for reducing the number of microorganisms on a surface of an object, refrigerator with such apparatus and a method for reducing the number of microorganisms, especially bacteria and/or virus, on a surface of an object (O), whereas the object (O) is placed (S1) on a support (103) within an inner room (I) limited by a housing (101) and an openable and closeable cover, whereas a first value corresponding to the size of the object (O) is determined (S3), especially when the object (O) is arranged on the support (103), whereas a second value corresponding to the mass of the object (O) is determined (S4), especially when the object (O) is arranged on the support (103), whereas in a closed state of the cover (102) the inner room (I) is heated (S6) to a first temperature above 55°C and below 100°C, for a first period of time, whereas the first temperature and/or the first period of time is based on the determined first and second value (S5), especially based on the product of the determined first and second value.

## Description

### TECHNICAL FIELD

The disclosure relates to an apparatus and a method for reducing the number of microorganisms on a surface of an object, especially food.

### BACKGROUND

The invention concerns the technical field of sterilization or disinfection of objects, especially food, respectively reducing the concentration of microorganism like bacteria ,virus and other microorganisms on the surface of objects.

Although applicable to any device or as stand alone solution, the present disclosure will mainly be described in conjunction with refrigerators.

A refrigerator is an essential white good for users and homes. It provides the possibility of long term storage of foods within a low temperature region. A refrigerator contains typically its own cooling system, e.g. comprising a compressor, and tries to set a specific climate of the inner cabinet of the refrigerator. Newer generations of refrigerators comprise additional features to control a humidity level of the inner cabinet and to provide better conditions for the storage life of food.

Especially with regard to pandemic situations, e.g. like the Covid19 pandemic, new type of viral, but also bacterial organisms are emerging and are threatening human health. Such organisms can be quite stable in cooled environments, like in a refrigerator. Such microorganisms can also spread via the surface of contaminated objects from a first human to a further human, especially in one household.

Both above mentioned functionalities of refrigerators do not provide a solution for microorganisms already present on an object stored in a refrigerator.

Accordingly, it is useful to consider sterilization or disinfection measures for refrigerators to reduce the numbers of microorganisms on surfaces of objects, especially mobile objects, e.g. food.

CN10844202A as well as CN108413701A disclose the sterilization of a refrigerator and food by utilizing UV light for sterilizing the refrigerator or food stored therein.

These solutions have the disadvantage that the UV radiation has typically a specific direction, so the respective object will be exposed only from one side to the UV-light or, in addition, the object needs to be manually rotated. Alternatively, a plurality of UV sources can be installed to sterilize an object properly.

It is also known to use thermal treatments for object to reduce the number of microorganisms. These thermal treatments are typically used for consumable liquids, e.g. like milk, to increase their storage life. These kind of processes are generally known as pasteurization or high pasteurization. Such processes are however used typically in industrial applications.

It is object of the invention to provide a method, an apparatus as well as an refrigerator for reducing the number of microorganisms on a surface of an object, especially for a mobile solid food object, for an end user.

### SUMMARY

The above stated problem is solved by the features of the independent claims. It is understood, that independent claims of a claim category may be formed in analogy to the dependent claims of another claim category.

Further embodiments of the present disclosure are subject of the further dependent claims and of the following description, referring to the drawings.

Accordingly, it is provided:
A method for reducing the number of microorganisms, especially bacteria and/or virus, on a surface of an object, whereas the object is placed on a support within an inner room limited by a housing and an openable and closeable cover, whereas a first value corresponding to the size of the object is determined, especially at a time the object is positioned on the support, whereas a second value corresponding to the mass of the object is determined, especially at a time the object is positioned on the support, whereas in a closed state of the cover the inner room is heated to a first temperature above 55°C, preferably above 60°C or 65°C, and below 100°C, for a first period of time, whereas the first temperature and/or the first period of time is based on the determined first and second value, especially based on the product of the determined first and second value.

In context of the invention, the term microorganisms comprise bacteria, virus and other organism on microscopic level, especially microorganisms that reduce the stock life of food or cause deceases by humans or animals.

By increasing the temperature of the inner room, respectively the temperature of the surface of the object, to a first temperature between 55°C and 100°C the number of microorganism on the surface of the object, which shall be understood as the outer physical boundary of the object, is reduced due to the temperature budget applied to the object. Temperature budget is understood to be a constant temperature times the period the object is exposed to such temperature. In case of non-constant temperatures this can be defined by the integral of the temperature over time. A higher temperature budget can therefore be achieved by increasing the time period a certain temperature is applied to an object or by increasing the temperature applied to an object for a certain time period. Also both parameters, temperature and period of time can be increased to increase the budget.

Especially, the first temperature can be chosen to be between 55°C and 70°C, especially between 60°C and 65°C, as surface temperatures above 55°C have adverse effect on the microorganisms on the surface of the object. Experiments have shown that applying a first temperature in this ranges reduce the number of microorganisms on the surface of the object significantly without damaging the object itself. However, dependent on the thermal stability of the object the first temperature can be higher, however below 100°C.

The first value determined for the object corresponds to the size of the object. Such first value corresponding with the size of the object can be determined inside or outside the inner room. Especially the first value can be determined while the object is placed on the support. The size of the object can be determined with a high variety of sensors that can provide an indication of the size of the object in a direct or indirect way, e.g. cameras, inductions sensors, electric sensors, etc.

The second value determined for the object corresponds to the mass of the object. Such second value way can be determined in a direct manner, e.g. by weighing the object. However such second value can also be determined in an indirect manner, measuring parameters that are associated with the mass, e.g. the volume or the electrical resistance of the object. Such second value corresponding with the size of the object can be determined inside or outside the inner room. The second value can be determined while the object is placed on the support.

The determined first and second value indicate properties of the object which allows to control the heating in an object-specific way.

After placing the object on the support arranged in the inner room, the cover is moved from an open state to closed state. In the closed state there is preferably no or no significant exchange of gas between cover and the housing. In other words, in these closed state the cover covers the housing gas-tight.

In the closed state, the control unit heats the inner room, respectively the surface of the object, to a first temperature above 55°C for first period of time. The selection for the chosen first temperature and the chosen period of time is based on the first and second value determined for the object.

It is also possible to combine the first and second value by multiplying these value, i.e. a product is formed from the determined first and second value, to determine a temperature budget, respectively a first temperature and a first period of time, to be applied to the object.

In one example, the first temperature can be kept constant for all objects, e.g. the first temperature can be selected to be 65°C, and the time budget is varied dependent on the determined first and second value. In another example, the first period of time can be kept constant and the first temperature is increased dependent on the determined first and second value. Increasing the temperature however increases the risk, that the object exposed to the temperature can be damaged. It is also possible to combine higher and lower first temperatures above 55°C with shorter or longer first periods of time to provide a sufficient temperature budget to the object to reduce the number of microorganisms on the surface of the object. In general, the higher the first and second value the more temperature budget can be applied to the object without damaging the object itself.

It is advantageous, if the object to which the method is applied, is stable in form respectively has a solid form, whereas a stable or solid form shall also comprise elastically and plastically deformable objects. E.g. a liquid is not considered an solid object, whereas a can containing a liquid is considered a solid or form stable object. However it has to be noted in that context that in this case the number of microorganisms are reduced on the outer surface of the can and not necessarily in the liquid arranged in the can. Especially the object, to which the method can be applied in favorable manner, is food or packaged food. The method can especially be used for mobile solid objects.

In an exemplary embodiment of the method the first temperature is maintained for a first period of time based on the product of the determined first and second value, whereas after lapse of the first period of time the inner room is cooled to a second temperature lower than the first temperature, especially between 0°C and 10°C. The first temperature is maintained can mean that the first temperature is constant or that the first temperature is constantly above 55°C, however variable.

In a further exemplary embodiment of the method the cooling of the inner room to a second temperature lower than the first temperature, especially between 0°C and 10°C, is started within a predefined period after the first period of time has lapsed. Especially it can be advantageous to start the cooling directly after lapse of the first period of time, i.e. the heating is ended and the cooling starts subsequently. However, the predefined period can also be several seconds. However it should be avoided to keep the object to long above 55°C after the heating has ended.

Especially the object can be cooled to second temperature over a second period of time. This second period of time can be constant or object-dependent, e.g. dependent on the first and second value.

By applying a cooling process, especially directly after the heating ended, the temperature within the inner room drops comparably fast and in a controlled manner. This reduces the risk for damaging the object by a slow decrease from the first temperature to lower temperature as there is only a small temperature budget applied with a temperature below 55°C. In addition the object can be released with temperature close to temperature of a storing chamber of a refrigerator. So in case of food or other objects to be cooled the object can be - after ending of the cooling procedure - directly transferred to a storage chamber of a refrigerator.

In another embodiment of the method the first temperature and/or the first period of time is based on a lookup table, which provides a first temperature and/or a first period of time for a set of reference values or reference intervals, whereas the first temperature and/or the first period of time is determined by comparing the product of the first and second value with the applicable reference value or reference interval. A look-up table, using verified reference values or reference intervals, is an easy way to control the heating process in an object dependent way.

The applicable reference value can be determined in different ways which are suitable to determine the first temperature and/or the first period of time. E.g. it can be selected as the reference value closest to the product value of the first and second value, or as the next reference value smaller than the product value. The latter can be used to decrease the risk that the object is damaged by the applied temperature budget. In case of a reference interval, typically the interval is selected of which the product value is part, respectively, in which the product value is located.

The control unit then selects the first temperature and/or the first period of time according to the reference value applicable for the determined product value, as given by the look-up value.

The look-up table is typically created by testing the method in a controlled environment for known objects. The first temperature and/or the first period of time is then defined based on the respective first and/or second value, especially on basis of the product of this first and second value, in such way that the number of microorganisms is reduced to given level. It's is advantageous of the look-up table is created specifically for certain technical boundary conditions, e.g. volume of the inner room, heating performance, etc. In this case the look-up table provides values for the first temperature and/or first period of time which achieve a sterilizing effect for a given object size and mass without damaging the object.

In a further advantageous embodiment the first value and/or the second value is determined by sensing an electrical resistance of the object. Such sensing of an electrical object is technically easy to provide an causes only low cost for its implementation. Such sensing can be implemented by providing an electrically conducting support structure, e.g. a grate-like support with locally distributed conduction paths, on which the object is placed. By means of these locally distributed conduction paths and the sensed data for the such conduction paths an indication can be received regarding the size of the object placed on the support, i.e. the first value. Such indication is e.g. given by the number of conduction paths providing resistance values associated with the presence of an object being. By measuring the resistance for the predefined conduction paths the size of the object can be determined by identifying the number of conduction paths for which the resistance of the conduction paths deviates compared to the resistance, if no object is present.

An indication for the mass of the object, i.e. the second value, can be determined e.g. by considering the maximum amount of electrical resistance provided by the object over the respective number conduction paths.

The object of the invention is also solved by an apparatus for reducing the number of microorganisms, especially bacteria and/or virus, on a surface of an object, comprising:
a housing with an openable and closable cover, whereas the housing and the cover in its closed state form together an inner room, a support arranged within the inner room, on which the object can be placed,
a first sensor to determine a first value corresponding to a size of the object,
a second sensor to determine a second value corresponding to a mass of the object,
a heating device suitable to heat the temperature of the inner room to a first temperature above 55°C and below 100°C, and
a control unit connected to the heating device, whereas the control unit comprises an executable program code suitable to control the heating device based on the first and second value, especially on the product of the first value and the second value, and especially is suitable to heat the inner room to a first temperature. Especially the control unit comprises an executable program code suitable control the heating device to heat the inner room to the first temperature for a first period of time, whereas the selection of the first temperature and/or the first period of time by the control unit is based on the determined first and second value, especially based on the product of the determined first and second value.

Such apparatus can be used to solve the technical problem as stand alone product. However, it can be also combined with other known devices, e.g. like refrigerators or ovens.

The housing and the cover form together - in the closed state of the cover - an inner room, in which the object can be placed. The housing and the cover can be construed to be thermally insulating. The inner room can have an arbitrary shape. The space of provided by the inner room should preferably be dimensioned to be able to insert a high variety of objects, especially food, in terms of size and mass. An above mentioned apparatus for application in combination with a refrigerator can e.g. have an inner volume of 10.000 cm3 to up to 100.000cm³.

The support can be mounted in the center part of the inner room. It is also advantageous, if the support is designed to be essentially transparent in a gas flow within the inner room, i.e. has a low flow resistance in a gas flow.

As first sensor to determine a first value corresponding to the size of the object all technical suitable sensors known by the person skilled in the art can be utilized. These sensors can be optical sensors, induction sensor or other sensors that are suitable to detect special extension of an object.

As second sensor to determine a second value corresponding to the mass of the object all technical suitable sensors known by the person skilled in the art can be utilized. The detected parameters should correlate with the mass of an object. This can be weighing sensors to determine the mass of an object directly, i.e. measuring a mass value, or indirectly, i.e. measuring a parameter that is associate indirectly with the mass of the object, e.g. oscillation frequencies, electrical resistance, image data etc. It is essential that the determined second value, determined by sensing or by calculation from sensed data, is correlated with the mass of the object such that it can provide an indication of the mass of the object. Also a known density of different objects can be used in combination with the sensed data to determine the second value. E.g. the object can sensed optically and an image recognition algorithm can be applied to identify the object. From the size of the object and the parameters present for a the recognized object, e.g. its density, the mass of the object can be calculated.

The first and the second sensor don't need to be separate sensors. The same sensor can be used to sense the data for the first value and for the second value, if such sensor is suitable for such application.

The use of the first value and the second value is based on the finding that for smaller lighter objects a smaller temperature budget is necessary to achieve the technical effect of reducing the number of microorganisms on the surface of the object than for bigger heavier objects. So it is especially an advantageous example to combine the first and the second value by multiplying these values and use the derived product value as basis for controlling the heating process.

As heating device in general all heating devices can be used that are able to create temperatures of at least 55°C in the inner room. However, it can be advantageous to use an electrical heating device as the technical efforts for implementing the electrical heating device are low. It also can be preferable to have temperature sensor to observe temperature in the inner room or on the surface of the object. Such temperature values delivered from the temperature sensor can be considered by the control unit to start the first period of time when the temperature of the inner room or the surface of the object reaches the first temperature.

The heating device is controlled via the control unit to control the heating process. For this reason the control unit comprises executable program code which can be processed by processor and thereby control the heating device based on the input of the first and second sensors. The first value and the second value can be determined by the control unit based on the sensor data from the first and second sensor, e.g. by calculation. Depending on the sensed data it can be possible to directly us this data as first and/or second value.

Especially the control unit comprises executable program code which comprises control commands that in case of execution induce the method steps of determining a first value corresponding to the size of the object, especially at a time the object is positioned on the support, determining a second value corresponding to the mass of the object, especially at a time the object is positioned on the support, heating in a closed state of the cover the inner room to a first temperature above 55°C, preferably above 60°C or 65°C, and below 100°C, for a first period of time, whereas the first temperature and/or the first period of time is based on the determined first and second value, especially based on the product of the determined first and second value.

In a further embodiment of the apparatus, the apparatus comprises a cooling device to cool the inner room from the first temperature to a second temperature lower than the first temperature. Especially the cooling device can be controllable by the control unit, e.g. like a controllable a piezo element. However, the cooling device needs not to be an active cooling device but can also be passive cooling device, e.g. a cold or cooled wall of the housing with temperature below room temperature, especially in thermal connection with a freezer or cooling unit of a refrigerator to cool the inner room. The possibility to cool the inner room allows to cool down the inner room and the object in comparably fast and controlled manner and avoids the exposure of the object to higher temperatures, but below the first temperature, over a longer time. The second temperature can be preferably in the range of temperature of a cooling unit of the refrigerator, esp. be selected from 0°C to 10°C.

In a further embodiment the heating element comprises a Peltier element. A Peltier element is a heating device that can be operated with electrical power and has the advantage that is a planar shape over which it emits heat. The inner room can therefore be heated over an area instead of using a punctual heat source. This improves the heating process. In a special embodiment the Peltier element can also be used - in addition of being a heating device - as cooling device. Such Peltier element can also be used as cooling device. Especially the same Peltier element can be used as heating and cooling device.

In a further exemplary embodiment the housing comprises at least one planar side, especially five planar sides limiting the inner room, whereas the Peltier element covers in terms of area at least the half of one planar side, especially 75%, especially 90%, of one side of the housing. In such embodiment the area via which the inner room is heated is distributed in an advantageous manner enabling a fast and efficient heating of the inner room over an increased area, especially if combined with a first fan.

In a further embodiment of the apparatus, the apparatus comprises a first fan, whereas the first fan is controllable by the control unit such that a gas contained in the inner room is revolved during the heating of the inner room. By utilizing such first fan the heat generated by the heating device, especially the Peltier element, is distributed efficiently in the inner room. The first fan is preferably mounted and operated such that the fan moves the gas in a laminar way over the heating device, especially the Peltier element, to improve the heating process of the inner room. Typically the gas is air, however it can also be gas different from air.

In another embodiment the apparatus comprises, especially in addition to the first fan, a second fan which is arranged such and is controllable by the control unit such that a gas contained in the inner room is revolved during the cooling of the inner room. The second fan therefore supports the dissipation of energy during the cooling phase of the inner room. The second fan can be comprised from the housing of the inner room or can be positioned within the inner room or closely distanced to the inner room. The second fan can be comprised by the cooling device. Especially, the second fan can be utilized in combination with a cooling channel through which gas having a temperature below the first temperature, e.g. room temperature or below room temperature, is provided into the inner room. In this case the fan can be used advantageously to suck in gas into the inner room with a temperature, e.g. room temperature or lower, and to distribute the sucked in gas in the inner room to cool down the inner room. In such configuration the second fan can be positioned in the area of or at an outlet opening of the cooling channel close to the inner room. If such cooling channel is present the cooling channel can preferably be closed, e.g. via a flap or a valve, controllable by the control unit or manually from outside of the apparatus, to avoid that gas is flowing out of the cooling channel during the heating phase reducing the efficiency of the heating process.

In a further embodiment another gas channel in addition to the cooling channel can be present for the apparatus through which the heated gas can flow out of the inner room during the cooling process. This avoids an overpressure in the inner room, if cooled gas is inserted and speeds up the cooling of the inner room as the heated gas is released from the inner room via the additional gas channel.

In another embodiment the support comprises a grate-like-structure on which the object can be placed. Such grate-like structure comprises a plurality of distanced spaced bars, whereas the object is placeable on the bars. The distance between neighbored bars is selected such that a high variety of objects can be placed on the bars without falling through the empty space between neighbored bars, e.g. between 0,5 cm and 2,0cm distance. This allows to securely place the object on the support. In addition the gas flow in the inner room is not significantly disturbed, respectively the grate-like support is structured such that is essentially transparent for a gas flow in the inner room.

In a further embodiment the support comprises a plurality of electrically conducting bars, whereas each bar is electrically insulated from the other bars, whereas the control unit is connected to each bar and is enabled to determine a first and/or second value by detecting an electrical resistance associate with each bar. Such configuration can also be described as a strip gauge. By utilizing such support the first value can be determined by counting the number of bars that have a different electrical resistance when no object is placed on the support. This corresponds to the size of the object in one direction. The separate control operation can be done e.g. via one strip to one analog to digital port or with a multiplexer or bus selector, if a processor of a control unit has not enough analog to digital ports.

In a further advanced exemplary embodiment there is at least a first group of bars and a second group of bars, whereas the first group and the second group are arranged orthogonal to each other. This allows to get an indication for the size of the object also in a second dimension. The first values for different directions can be multiplied and used as new first value. The second value can be determined by using the maximum electrical resistance measured for the plurality of bars when an object is placed on the support. In case of an a first and a second group of bars the mean value can be used as second value or the maximum value for all bars.

Using such electrically conducting grate-like structure is an easy way to determine the first and/or second value for controlling the heating process.

In another embodiment of the apparatus the control unit comprises a memory, in which a look-up table is stored, whereas the look-up table contains reference values or reference intervals, each reference value or reference interval corresponds to a first temperature and/or first period of time to be applied to the inner room, whereas the control unit is suitable to determine the first temperature and/or the first period of time by comparing a product of the determined first and second value with the reference values or reference intervals and the control unit is enabled to control the temperature of the inner room based on the comparison of the product of the first and second value with the reference values or reference intervals.

The object of the invention is also solved by a refrigerator comprising a cooling unit and a freezer unit, further comprising an apparatus according to one of the claims 5 to 13, whereas at least one part of the housing is comprised by the cooling unit or the freezer unit. Preferably the heating device and/or the cooling device is connected to a power supply of the refrigerator. In a preferred example the apparatus is part of the freezing unit or part of the cooling unit of the refrigerator, i.e. comprised by the cooling unit or freezer unit. Especially the housing of the apparatus can be located entirely within a cooling chamber of a cooling unit or a freezer chamber of the freezing unit.

In an further embodiment of the refrigerator the apparatus according to one of the claims 5 to 13 comprises a cooling device, whereas the cooling device comprises a gas channel for guiding gas from the cooling unit or the freezer unit into the inner room. The cooling unit comprises preferably a fan to suck in the gas from the cooling unit or freezer unit. The gas from the cooling unit or freezer unit is typically below room temperature and can be used for efficiently cooling the inner room after the heating process.

### BRIEF DESCRIPTION OF THE DRAWINGS

For a more complete understanding of the present disclosure and advantages thereof, reference is now made to the following description taken in conjunction with the accompanying drawings. The disclosure is explained in more detail below using exemplary embodiments which are specified in the schematic figures of the drawings, in which:
Figure 1 shows a schematic representation of an exemplary embodiment of an apparatus for reducing the number of microorganisms on a surface of an object,
Figure 2 shows a flow chart representing an exemplary embodiment of a method for reducing the number of microorganisms on a surface of an object,
Figure 3 shows a schematic representation of an refrigerator with an apparatus according Fig 1.

In the figures like reference signs denote like elements unless stated otherwise.

### DETAILED DESCRIPTION OF THE DRAWINGS

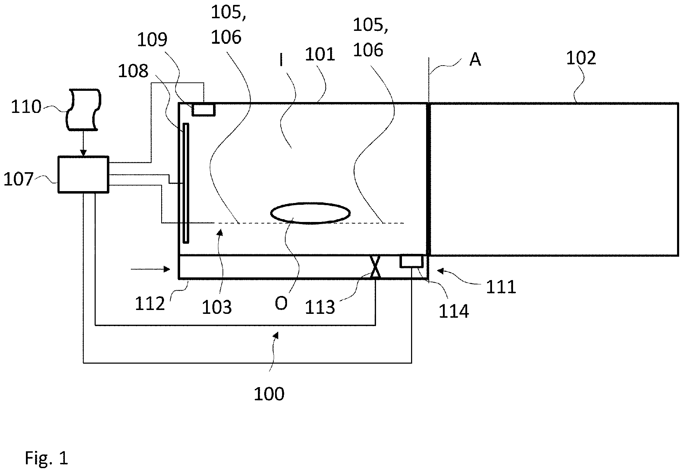

Figure 1 shows an exemplary embodiment of an apparatus 100 for reducing the number of microorganisms on a surface of an object O. The apparatus 100 comprises a housing 101 and a cover 102. The cover 102 is mounted rotatably around an axis A relative to the housing 101 to open and close the cover 102. The cover 102 can be moved from an open state to a closed state or from a closed state to an open state by rotating the cover 102 around the Axis A. In the closed state the cover 102 realizes together with the housing 101 an essentially gas-tight configuration and provides an inner room I in which a heat treatment of an object O can take place. Figure 1 however shows the apparatus 100 with the cover 102 in an open state.

The apparatus 100 further comprises a support 103 on which an object O , e.g. food or packaged food, can be positioned. The support 103 comprises a plurality of spaced bars 104, suitable to carry an object O.

The bars 104, which are electrically conductive, however insulated from each other, work in this embodiment as first sensor 105 and second sensor 106 to determine a first value and a second value associated with the object O. For this reason each bar 104 is connected with a control unit 107. The control unit 107 is enabled to determine - by applying voltage and or a current to the respective bar 104 - which bar is touched by the object O and which bar 104 is not touched by the object O. The number of touched bars indicate a size of the object and is used as first value.

Together or in addition the control unit initiates the determination of the amount of an electric resistance provided by the object for the respective bar 104. As second value the maximum measured resistance is used after the resistance has been determined for each touched bar 104. This maximum measured electric resistances indicates the mass of the object O.

The control unit 107 is enabled to multiply the first and second value, i.e. creating a product from the first and second value, and to process this further. The control unit 107 comprises a look-up table 110, in which reference values are provided with respective parameters for heating an object O. The control unit 107 is further enabled to compare the derived product value, by multiplying the first and second value, with available reference values. The control unit 107 is enabled to select the applicable reference value according to predefined criteria. In this embodiment the next smaller reference value compared to the product value is selected.

Based on the selection of the reference value the control unit derives the parameters for the heating process. In the presented embodiment, the temperature that shall be reached for the heating process, i.e. the first temperature, is a constant parameter for each object O. In this embodiment the temperature shall be above 60°C, especially between 60°C and 65°C. This is provided by operating a heating device 108 with a certain power level, which can be controlled by the control unit 107. In this presented embodiment only the time period to which the object is exposed to this first temperature is dependent on the product of the first and second value.

An exemplary look-up table 110 is hereby presented:

| Reference value for product value derived from multiplication (m*n) of first value (n) and second value (m) | Heating time for first temperature 65°C in minutes |
|---|---|
| <1 | 4 |
| 1 | 6 |
| 2 | 6 |
| 3 | 7 |
| ··· | ··· |
| 10 | 13 |
| 11 | 15 |
| ··· | |
| >15 | 22 |

However the heating can also be controlled in different ways, e.g. by utilizing variable first temperatures and first periods in time dependent on the object parameters. E.g. also a closed loop control can be used by utilizing a temperature sensor able to detect the temperature of the inner room or the temperature of the surface of the object und to control the heating process accordingly.

After the heating parameters have been derived from the look-up table 110 the heating starts. According to Figure 1 a planar Peltier element is used as heating device 108. The Peltier element can be operated with a DC voltage that heats the surface of the Peltier element directed to the object O. When the heating process is started or with a certain delay of e.g. 30 to 60 seconds a first fan 109 can start its operation. The first fan 109 revolves the air contained in the inner room I and moves the heated air from the surface of the Peltier element around the object O. As the cover 102 forms a gas-tight connection with the housing 101 the heated air stays within the inner room I and heats up the surface of the object O.

As soon the as the first period of time is reached, given by the look-up 110, or a temperature of the surface of the object is reached, the heating process is stopped and a cooling process is directly started. This avoids that an object gets damaged by unnecessary long exposure to the first temperature or higher temperatures close to the first temperature.

In the present embodiment the apparatus 100 comprises a cooling device 111. The cooling device 111 comprises a cooling channel 112 and second fan 114. Through the cooling channel 112 air from the outer environment of the apparatus 100 can be inserted into the inner room I by means of the second fan 114. As the temperature of the outer environment is typically below the first temperature to which the inner room I, respectively the surface of the object O, was heated, the temperature in the inner room I starts to drop fast and significantly. The second fan is also arranged such that it does not only suck in air or gas via the cooling channel 112, but also distributes the sucked in air or gas actively within the inner room.

The second fan 114 is operated for a certain amount of time to cool down the inner room I. This time can be constant independent from the object that has been heated. If the apparatus 100 is used as part of refrigerator, the air which can be sucked in can originate from a cooling unit or a freezer unit. In this case the cooling process can be speed ab due to the availability and use of cooled gas, especially air.

For avoiding loss of gas and/or energy through the cooling channel 112 during the heating process the cooling device also comprises a closing unit 113, e.g. a one-way-valve or a flap, to avoid a gas flow from the inner room I through the cooling channel 112 to the outer environment of the apparatus 100, e.g. into the cooling unit or freezer unit of a refrigerator. During heating the closing unit 113 blocks a gas flow out of the inner room I into the outer environment.

The cooling device 111, especially the second fan 114, is connected to the control unit 107 whereas the control unit 107 is enabled to control the cooling device 111. As mentioned above the cooling can take place by introducing gas or air from the outer environment to the inner room I for a second period of time. This second period of time is controlled is controlled by the control unit and can be variable based on the object O to be cooled.

The cooling can also be realized as temperature based process, e.g. the temperature of the inner room is measured or the temperature of the object surface is measured, and if a desired value is reached the cooling process stops.

In case cooled gas is used to cool the inner room I, the inner room or the surface of the object O can be cooled to a temperature of a cooling unit of the refrigerator in which the object O can be placed after the temperature treatment.

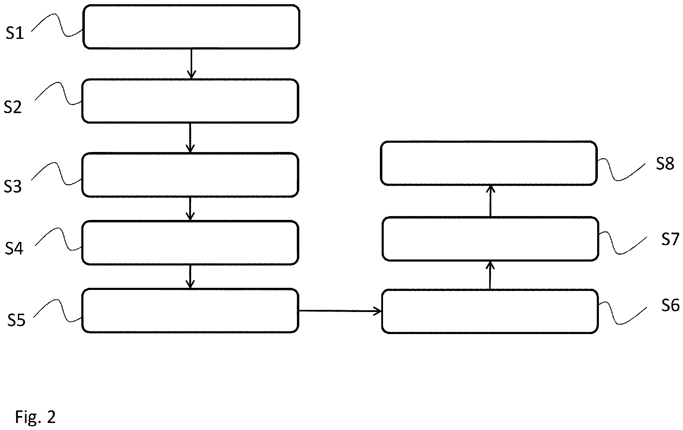

Figure 2 shows a flowchart representing an exemplary embodiment of a method for reducing the number of microorganisms on a surface of an object. Such method can be executed by an apparatus according to Figure 1.

In a first step S1 an object is placed on the support for the thermal treatment. This object, e.g. a yoghurt cup, a packaged salad, fruits, vegetables, etc.., is typically manually placed on the support, preferable on a center part of the support to have sufficient distance to the housing of the apparatus. Sufficient distance of the object to the housing, e.g. at least 5 centimeters, supports a good flow of gas in the inner room of the apparatus during the heating and the cooling process.

In a second step S2 the cover of the apparatus is closed. By this the inner room is formed in which the thermal treatment of the object takes place. The closing of the cover can trigger the activation of first sensor and the second sensor to determine the first and second value. This has the advantage that there is no danger for the user from any electric current or electric voltage applied to the support, when the user places the object on the support.

In a third step S3 the control unit determines a first value indicating a size of the object via the grate-like structure of the support. This is realized by sensing which bars, comprised by the support, are in touch with the object.

In a further step S4 the control unit determines a second value indicating the mass of the object. This is realized by taking the maximum electric resistance value of all electric resistances values measured for the bars in touch with the object.

In presented embodiment of the method a product of the first and second value is generated by multiplying the first and second value. The resulting product value is used to control the heating process. However also e.g. an addition of the first and second value can be used to determine the first period of time from a respectively adapted look-up table.

In a next step S5 the control unit determines, based on the look-up table accessible by the control unit, the first period of time the heating device shall heat the inner room. In the underlying embodiment a constant first temperature is used for every object. Only the first period of time is adapted to the determined first and second value, respectively the product thereof.

The content of the look-up table is specific for the respective apparatus 100, and depends e.g. on the volume of the inner room, the heating configuration, like heating device, the heating power, its way of heating, heat distribution, etc.. In this embodiment the first period of time present in the look-up table for the reference values is adapted to the specific boundary conditions given by the apparatus and its application, e.g. as part of a refrigerator.

For selecting the appropriate first period of time the derived product value is compared with the reference values and the closest smaller reference value to the product value is selected. The first period of time assigned to that selected reference value is chosen to operate the heating device by the control unit.

In a following step S6 the control unit activates the heating device for the derived first period of time. A first fan can be started by the control unit together with or with a time delay to the heating device to distribute warmed gas in the inner room and bring it in contact with the surface of the object. In addition, a closing unit installed in a cooling channel can be closed to avoid that warmed gas flows out of the inner room through the cooling channel.

After the first period of time is over, the heating is stopped and a cooling device is activated by the control unit to cool down the inner room and operated for a given time. This is performed in a step S7. A second fan comprised by the cooling device is activated which sucks in air with room temperature or with temperature lower than room temperature, which is guided to the inner room. The fan also ventilates the introduced gas in the inner room to decrease the surface temperature of the object.

After the cooling device has been operated by a given time, the cooling is stopped by the control unit and the object can be removed from the apparatus in step S8 by opening the cover and removing it.

The number of microorganisms on the surface to the object has been significantly reduced by this thermal treatment for the specific object.

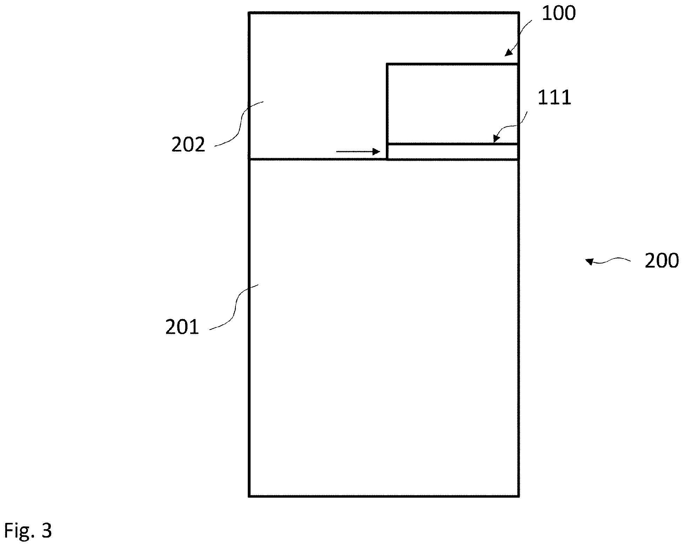

Figure 3 shows a schematic representation of a refrigerator 200 comprising a cooling unit 201, a freezer unit 202 and an apparatus 100. In this embodiment the apparatus 100 is comprised by freezer unit 202. Alternatively it can also be comprised by the cooling unit 201.The apparatus 100 can comprise its own cover or can be opened or closed with the cover of the freezer unit 202 or the cooling unit 201 or by the cover of the refrigerator.

The cooling channel 112 of the apparatus 100, as described in Figure 1, for providing gas or air into the inner room comprises two openings, a first inlet opening and second outlet opening. The inlet opening is positioned in a freezer chamber of the freezing unit 102 to be able to suck in cooled air from the freezer unit 102.

Alternatively the first inlet opening of the cooling channel 112 can be positioned in a cooling chamber of the cooling unit 101.

The second outlet opening is arranged such that via this outlet opening gas or air can flow out into inner room of the apparatus 100.

The apparatus 100 is electrical connected to a power supply of the refrigerator 200, e.g. via a mainboard, not shown in Figure 3, to receive the power for operation from the respective components of the refrigerator 200.

Although specific embodiments have been illustrated and described herein, it will be appreciated by those of ordinary skill in the art that a variety of alternate and/or equivalent implementations exist. It should be appreciated that the exemplary embodiment or exemplary embodiments are only examples, and are not intended to limit the scope, applicability, or configuration in any way. Rather, the foregoing summary and detailed description will provide those skilled in the art with a convenient road map for implementing at least one exemplary embodiment, it being understood that various changes may be made in the function and arrangement of elements described in an exemplary embodiment without departing from the scope as set forth in the appended claims and their legal equivalents. Generally, this application is intended to cover any adaptations or variations of the specific embodiments discussed herein.

Thus, the present invention describes an apparatus for reducing the number of microorganisms on a surface of an object, refrigerator with such apparatus and a method for reducing the number of microorganisms, especially bacteria and/or virus, on a surface of an object (O), whereas the object (O) is placed (S1) on a support 103 within an inner room (I) limited by a housing 101 and an openable and closeable cover, whereas a first value corresponding to the size of the object (O) is determined (S3), especially when the object (O) is arranged on the support 103, whereas a second value corresponding to the mass of the object (O) is determined (S4), especially when the object (O) is arranged on the support 103, whereas in a closed state of the cover 102 the inner room (I) is heated (S6) to a first temperature above 55°C and below 100°C, for a first period of time, whereas the first temperature and/or the first period of time is based on the determined first and second value (S5), especially based on the product of the determined first and second value.

### LIST OF REFERENCE SIGNS

100 apparatus
101 housing
102 cover
103 support
105 first sensor: electrically conducting bar
106 second sensor: electrically conducting bar
107 control unit
108 heating device: Peltier element
109 first fan
110 look-up table
111 cooling device
112 cooling channel
113 closing unit
114 second fan

200: Refrigerator
201: Cooling unit
202: Freezing unit

O: Object
I: Inner Room
A: rotation axis of the cover

S1: Placing an object in the inner room
S2: closing the cover
S3: determine the first value corresponding to the size of the object
S4: determine the second value corresponding to the mass of the object
S5: determine the first period of time for the heating process
S6: heating the heating element according to the values of the look up table
S7: Cooling for a certain amount of time
S8: Remove object from the support

## Claims

1. Method for reducing the number of microorganisms, especially bacteria and/or virus, on a surface of an object (O), whereas the object (O) is placed (S1) on a support (103) comprised by an inner room (I) limited by a housing (101) and an openable and closeable cover, whereas a first value corresponding to the size of the object (O) is determined (S3), especially when the object (O) is arranged on the support (103), whereas a second value corresponding to the mass of the object (O) is determined (S4), especially when the object (O) is arranged on the support (103), whereas in a closed state of the cover (102) the inner room (I) is heated (S6) to a first temperature above 55°C and below 100°C, for a first period of time, whereas the first temperature and/or the first period of time is based on the determined first and second value (S5), especially based on the product of the determined first and second value.

2. Method according to claim 1,
whereas a cooling (S7) of the inner room (I) to a second temperature lower than the first temperature, especially between 0°C and 10°C, is started within a predefined period after the first period of time has lapsed.

3. Method according to claim 1 or 2,
whereas the first temperature and/or the first period of time is based on a lookup table (110), which provides a first temperature and/or a first period of time for a set of reference values or reference intervals, whereas the first temperature and/or the first period of time is determined (S5) by comparing the product of the first and second value with the applicable reference value or reference interval.

4. Method according to one of the preceding claims,
whereas the first value and/or the second value is determined by sensing (S3, S4) an electrical resistance of the object (O).

5. Apparatus (100) for reducing the number of microorganisms, especially bacteria and/or virus, on a surface of an object (O), comprising:
a housing (101) with an openable and closable cover (102), whereas the housing (101) and the cover (102) in its closed state form together an inner room (I),
a support (103) arranged within the inner room (I), on which the object (O) can be placed,
a first sensor (104) to determine (S3) a first value corresponding to a size of the object (O),
a second sensor (104) to determine (S4) a second value corresponding to a mass of the object (O),
a heating device (108) suitable to heat the temperature of the inner room (I) to a first temperature above 55°C and below 100°C, and
a control unit (107) connected to the heating device (108), whereas the control unit comprises an executable program code suitable to control (S6) the heating device (108) based (S5) on the first and second value, especially based on the product of the first value and the second value.

6. Apparatus according to claim 5,
comprising a cooling device (111) to cool the inner room (I) from the first temperature to a second temperature lower than the first temperature.

7. Apparatus according claims 5 or 6,
whereas the heating device (108) comprises a Peltier element.

8. Apparatus according to claim 7,
whereas the housing (101) comprises at least one planar side, especially five planar sides limiting the inner room, whereas the Peltier element covers in terms of area at least the half of one planar side of the housing (101).

9. Apparatus according to one of the claims 5 to 8,
comprising a first fan (109) whereas the first fan (109) is controllable by the control unit (107) such that a gas contained in the inner room (I) is revolved during the heating of the inner room (I).

10. Apparatus according to one of the claims 6 to 9,
comprising a second fan (114), whereas the second fan (114) is arranged such and controllable by the control unit (107) such that a gas contained in the inner room (I) is revolved during the cooling of the inner room (I).

11. Apparatus according to one of the claims 5 to 10,
where as the support (103) comprises a grate-like structure with a plurality of bars (104) on which the object (O) can be placed.

12. Apparatus according to claim 11,
whereas the grate-like structure comprises a plurality of electrically conducting bars (104), whereas each bar (104) is electrically insulated from the other bars (104), whereas the control unit (107) is connected to each bar (104) and is enabled to determine (S3, S4) a first and/or second value by detecting an electrical resistance associate with each bar (104).

13. Apparatus according to one of the claims 5 to 12,
whereas the control unit (107) comprises a memory, in which a look-up table (110) is stored, whereas the look-up table (110) contains reference values or reference intervals, each reference value or reference interval corresponds to a first temperature and/or first period of time to be applied to the inner room (I), whereas the control unit (107) is suitable to determine (S5) the first temperature and/or the first period of time by comparing a product of the determined first and second value with the reference values or reference intervals and the control unit is enabled to control (S6) the temperature and or the first period of time of the inner room (I) based on the comparison of the product of the first and second value with the reference values or reference intervals.

14. Refrigerator (200) comprising a cooling unit (201) and a freezer unit (202), further comprising an apparatus (100) according to one of the claims 5 to 13, whereas at least one part of the housing (101) is comprised by the cooling unit (201) or the freezer unit (202).

15. Refrigerator according to claim 14,
whereas the apparatus (100) according to one of the claims 5 to 13 comprises a cooling device (111) comprising a gas channel (112) for guiding gas from the cooling unit (201) or the freezer unit (202) into the inner room (I).
